# EUROPEAN PATENT APPLICATION

(11) **EP 1 231 730 A2**
(43) Date of publication of application: **14.08.2002**
(21) Application number: 01303184.4
(22) Date of filing: 04.04.2001
(51) Int. Cl.: H04J 14/02

(54) **Continuous wave laser subsystem**

(30) Priority: 12.02.2001 US 782601
(71) Applicant: Redfern Broadband Networks Pty Ltd, Eveleigh, New South Wales 1430 (AU); Redfern Broadband Networks Inc., Wilmington, County of Newcastle, Delaware, 19801 (US)
(72) Inventor: Lauder, Richard, Maroubra,New South Wales 2035 (AU); Halgren, Ross, Collaroy Plateau, New South Wales 2097 (AU); Summerfield, Mark, Northcote, Victoria 3075 (AU)
(74) Representative: Driver, Virginia Rozanne

(57) **Abstract**

An optical modulation system for independently modulating multiple wavelengths and transmitting them along a single output waveguide, the system comprising: a series of optical modulator elements each having at least one modulator waveguide input for inputting a single wavelength and modulation means for modulating the input single wavelength to produce a modulated wavelength output; an array of optical laser emitters, each emitting at a separate wavelength, the array having a series of wavelength outputs, one each of which is interconnected to the waveguide modulator input of the series of optical modulator elements; and an optical multiplexer taking a series of a modulated wavelength outputs having differing wavelengths and for multiplexing the multiple wavelengths together for output onto the single output waveguide.

## Description

The present invention relates to the construction of dense wavelength division multiplexing (DWDM) systems, and in particular, discloses a system for the efficient construction of interfacing cards for such a system.

Recently, there has been a substantial increase in the utilisation of optical fibre communication systems which utilise the modulation of various wavelengths of light to transmit information.

In particular, dense wavelength division multiplexing (DWDM) system, wherein multiple wavelengths are transmitted along a single fibre, have become increasingly popular.

Normally, dense wavelength division multiplexing systems require the ability to combine and separate a large number of single channels which have closely spaced apart wavelengths. In such arrangements, a substantial number of wavelength dependent facilities must be provided. For example, each separate wavelength of operation must be independently managed and controlled with laser emitters or modulators and the like.

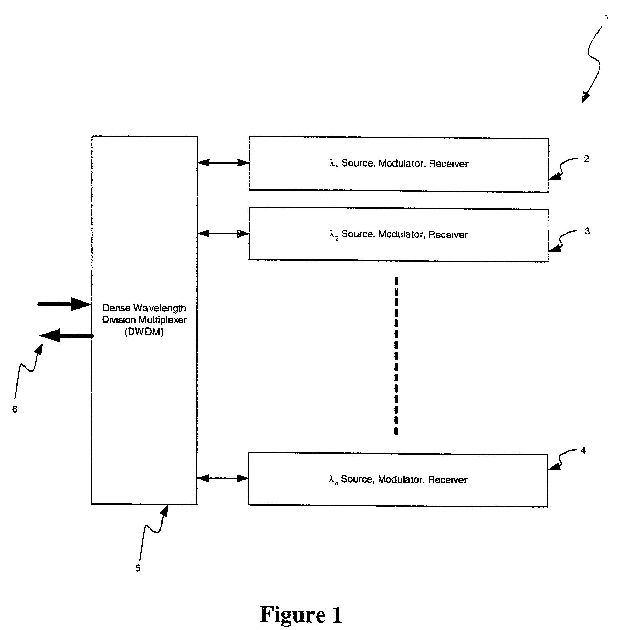

For example, in Figure 1, there is illustrated schematically an arrangement of the prior art showing a typical DWDM system 1 provided with a series e.g. 2, 3, 4 of interface cards comprising wavelength dependent transmitter, modulator and receiver elements. Each element e.g. 2 includes a wavelength dependent laser light source, a modulator for modulating the light source and receiver for detecting the return channel signal. The signals are multiplexed and demultiplexed by a dense wavelength division multiplexer 5 for being input and output on input/output optical fibre 6.

Typically in the prior art embodiments the interface card is wavelength dependent primarily because it comprises a single wavelength optical source such as a distributed feedback (DFB) semiconductor laser diode. The output wavelength of a DFB laser is determined at manufacture, and can only be tuned over a very limited range by controlling the temperature of operation of the laser. This range is typically sufficient to enable the output wavelength to be aligned precisely to the intended DWDM channel wavelength, but not to enable the wavelength to be tuned to other DWDM channels. Accordingly, it is generally true that with the arrangement of Figure 1 the output wavelength of each interface card e.g. 2, 3, 4 is determined at the time of manufacture, and cannot be subsequently altered. Hence, it is necessary for the complex provisioning of spares to be undertaken and complex manufacturing resource planning must also be undertaken so as to provide for a wavelength dependent interface card.

It has been previously proposed to replace the fixed wavelength laser sources with tuneable wavelength sources. With this approach, the interface cards would no longer be wavelength dependent, because the laser source may be tuned to the desired wavelength when the card is deployed, rather than being determined at the time of manufacture. Suitable tuneable semiconductor sources could be, for example, two- or three-section distributed Bragg reflector (DBR) lasers or multi-section gain-coupled sampled-grating reflector (GCSR) lasers. However, such technologies are immature at this time, and as a result devices are not available in sufficient quantity, have limited tuning range and/or complex control requirements and may not be sufficiently reliable for wide-scale deployment.

It is an object of the present invention to provide for an improved form of interface for a DWDM system or the like.

In accordance with a first aspect of the present invention, there is provided an optical modulation system for independently modulating multiple wavelengths and transmitting them along a single output waveguide, the system comprising: a series of optical modulator elements each having at least one modulator waveguide input for inputting a single wavelength and modulation means for modulating the input single wavelength to produce a modulated wavelength output; an array of optical laser emitters, each emitting at a separate wavelength, the array having a series of wavelength outputs, one each of which is interconnected to the waveguide modulator input of the series of optical modulator elements; and an optical multiplexer taking a series of a modulated wavelength outputs having differing wavelengths and for multiplexing the multiple wavelengths together for output onto the single output waveguide;

The array of optical laser emitters preferably can include a continuous wave laser subsystem. The optical multiplexer further can comprise a demultiplexer for demultiplexing a signal fed along the single output waveguide into a series of spatially displaced independent wavelength channels for output to the optical modulator elements, the optical modulator elements further comprising a receiver for detecting the signal on a received wavelength channel.

The system can be located on a series of subracks and the optical modulator elements are preferably located on a separate subrack from the optical laser emitters and are preferably connected thereto by a series of detachable optical waveguides.

The array of optical laser emitters preferably can include a series of fibre lasers interconnected to at least two pump sources wherein substantially each fibre laser can be independently connected to each pump source. The interconnection can be via redundant optical couplers. The system further can comprise a series of variable optical attenuators interconnected with the fibre lasers so as to provide variable optical attenuation of the output of the fibre lasers. The degree of attenuation can be such that upon failure of one of the pump sources, the degree of attenuation can be adjusted to provide an output in excess of a predetermined intensity level.

Alternatively, the optical laser emitters comprise a discrete single wavelength semiconductor laser or a semiconductor laser array. The modulation means can include an electro absorption modulator or a Mach-Zehnder modulator.

Further, the interconnection between the optical modulator elements and the optical laser emitters can be by means of polarisation maintaining fibres.

Preferred embodiments of the present invention will now be described with reference to the accompanying drawings in which:
Fig. 1 illustrates schematically a prior art DWDM arrangement;
Fig. 2 illustrates schematically the DWDM arrangement of the present embodiment;
Fig. 3 illustrates schematically a first arrangement of the laser subrack of the preferred embodiment;
Fig. 4 illustrates schematically a second arrangement of the laser subrack of the preferred embodiment; and
Fig. 5 illustrates schematically a third arrangement of the laser subrack of the preferred embodiment;

In the preferred embodiment, the active interface card is made wavelength independent thereby substantially reducing the problems associated with providing spares and unique wavelength dependant manufacturing. A separate source of continuous wavelength laser light is input to the interface card which modulates the data onto its predetermined wavelength. The receiver located on the interface card may comprise a conventional semiconductor photodiode or avalanche photodiode. As such, it is wavelength independent within the DWDM signal band due to the inherent broadband nature of such devices.

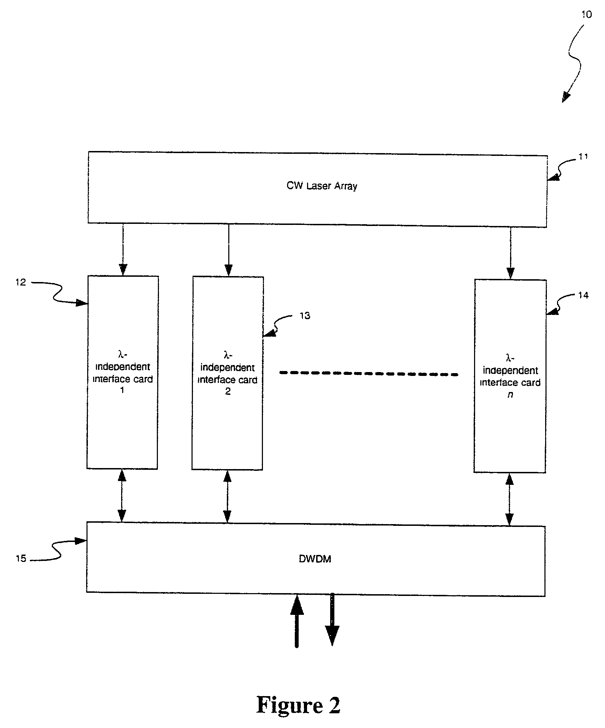

The overall arrangement can be as illustrated schematically in Figure 2 with a CW laser array feeding into a series of wavelength independent interface cards e.g. 12, 13, 14. The interface cards, 12, 13, 14 each modulate a particular wavelength which is then multiplexed together by multiplexer 15.

The removal of the laser source from the interface cards enables the interface cards to be wavelength independent. As they have no laser source they will also consume less power and can be potentially made of a smaller fit. The rearrangement requires an extra optical interconnect between the CW laser array and the interface cards for feeding the CW laser source for modulation to each card after which the signal can be output via the normal connection.

In one embodiment, the modulator on the interface card may be an electro-absorption (EA) modulator. The EA modulator has the advantage that it may be made insensitive to the polarisation of the input light. Accordingly, it is not necessary to control the polarisation of the light within the waveguides connecting the CW laser source outputs to the modulator inputs. However, the EA modulator may not be entirely wavelength independent, providing for an operating bandwidth of, e.g. up to 20 nm, which may not be sufficient to cover the full wavelength range in a DWDM communications system. It may therefore be necessary to provide a small number of different interface cards, each comprising an EA modulator optimised for use in a different wavelength range. While this will significantly alleviate the problem of spares provisioning, it will not eliminate it entirely.

In an alternative embodiment, the modulator on the interface card may be a lithium niobate Mach-Zehnder modulator (MZM). The MZM has the advantage of being insensitive to the wavelength of the input light, within the DWDM communication band. Accordingly, it would not be necessary to provide different interface cards to cover different wavelength bands, thus eliminating completely the problem of spares provisioning. However, the MZM is typically sensitive to the polarisation of the input light. It may therefore be necessary to control the polarisation of the light within the waveguides connecting the CW laser source outputs to the modulator inputs. Accordingly the interconnecting waveguides may be constructed from polarisation maintaining optical fibres.

The CW laser array can be mounted on a separate subrack and consist of an array of continuous wavelength lasers. These lasers can be integrated to form a single source array or can be an array of discrete lasers. The output from the CW laser subrack is an array of fibres each carrying a CW source locked to the appropriate wavelength.

In a first arrangement, the CW laser subrack can consist of an array of single-wavelength continuous wave (CW) semiconductor lasers, such as discrete DFB lasers. While such lasers rely on a mature technology, the disadvantage is that the array of CW semiconductor lasers is likely to have a larger footprint than the interface subrack by itself and that the lasers themselves will require many active components for temperature, output power and wavelength control. As such, many of the disadvantages of wavelength dependent transponders regarding manufacturing and sparing will be simply transferred from the wavelength independent interface cards to the CW laser array.

In a second arrangement, the CW laser subrack can consist of a smaller number of devices, each comprising an integrated array of say between eight and sixteen DFB lasers in a single package. This will reduce the overall footprint of the CW lasers, as well as the number of active components required, thus alleviating some of the disadvantages associated with the use of discrete DFB lasers.

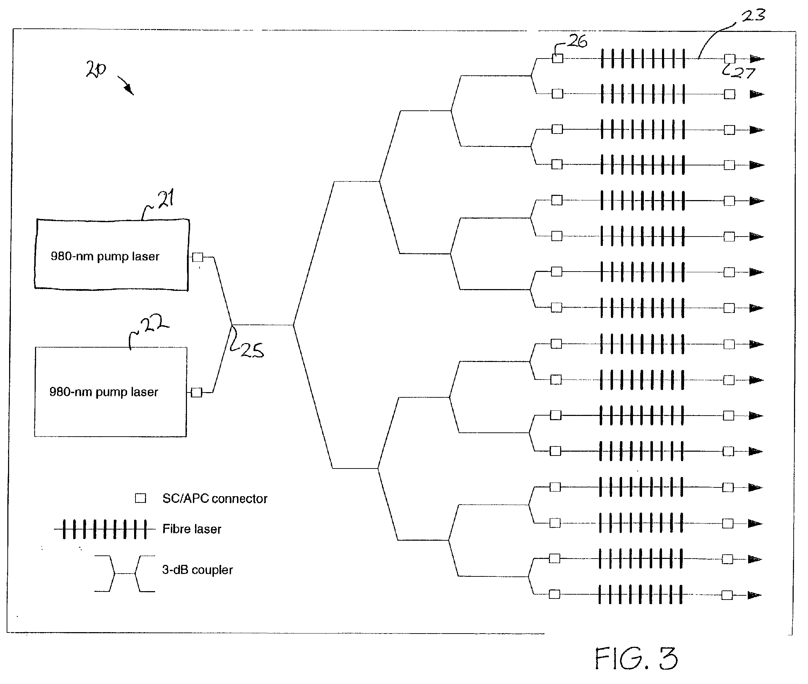

An alternative arrangement can be to utilise fibre lasers in the CW array. A more convenient arrangement utilising fibre lasers can be as illustrated 20 in Figure 3 wherein two 980 nm pump lasers 21, 22 are utilised to drive a series of fibre lasers e.g. 23, with the pump lasers being shared amongst the fibre lasers by means of a series of 3-dB couplers e.g. 25. Each pump laser has a footprint, and requires active control, equivalent to that of a single CW DFB laser. This arrangement thus offers potentially the greatest benefit overall in terms of size, cost, reliability and spares provisioning. The fibre lasers e.g. 23 do not require active temperature or wavelength stabilisation and are connected to the pump lasers by a series of standard optical connectors e.g. the SC/APC type connectors 26. Further the output of each fibre laser 23 is also connected by a standard optical connector e.g. the SC/APC type connector 27.

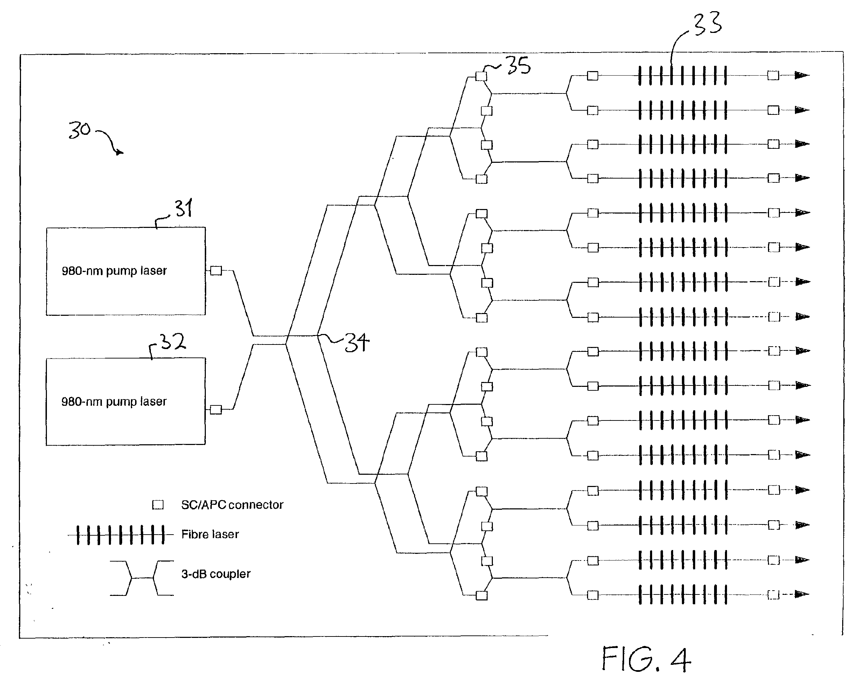

In alternative embodiments, more fault tolerant arrangements are possible. An example of such an alternative arrangement is illustrated 30 in Figure 4 wherein each pump laser e.g. 31, 32 is independently utilised to interconnect with each fibre laser e.g. 33 via a series of 3-dB couplers e.g. 34 and SC/APC connectors e.g. 35. Each pump laser 31, 32 is utilised to drive each fibre laser e.g. 33. The arrangement of Figure 4 has a reduced possibility of failure as it will be appreciated that the failure of any single component, i.e. a pump laser e.g. 31, a 3-dB coupler e.g. 34 or a connector e.g. 35, will not result in a failure of any laser e.g. 33. The arrangement of Figure 4 can be further modified by placing a 980/1550 WDM after each fibre laser so as to filter off any unused pump light and feed this back into an unused 3-dB coupler input.

Further by increasing the number of pump lasers for sharing amongst the fibre lasers then it may be possible that should one of the pump lasers fail then the output power of the fibre lasers still remain within a required tolerance.

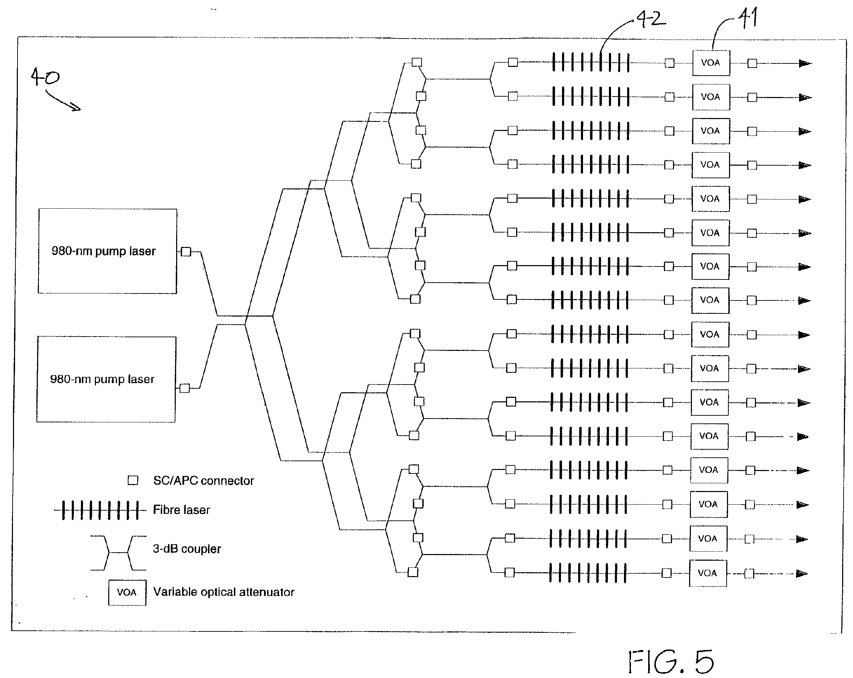

Alternatively, an active power control arrangement may be utilised such that shown 40 in Figure 5. In this arrangement, a series of variable optical attenuators (VOA's) e.g. 41 have been added to the overall system. The variable optical attenuators can be utilised to power balance each output from a corresponding fibre laser 42. The variable optical attenuators can be set to a level such that, in the event of failure of one of the 980nm pumps, the attenuation of the VOA is reduced so as to keep the output power constant. The 980nm pump can then be hot swappable so that the failed unit can be replaced and the VOA's set to normal operating point. Further, in particular arrangements, it may be desirable to slot in and remove the fibre lasers 42 whilst the arrangement 40 is active.

The arrangements as previously discussed provide the advantage of removing the wavelength dependence from the modulator and receiver interface cards, thus simplifying the manufacture and spares provisioning of the interface cards. Where fibre lasers are utilised for the supply of CW light there is the opportunity for reducing the power consumption of network elements and passive wavelength locking. Further, in the case of fibre lasers being utilised, the pump sources can fail and be replaced without interruption to the live traffic. The passive fibre lasers themselves may have higher availability and lower probability of failure thereby leading to lower operation and maintenance and ongoing costs. This is likely to be at the expense of higher upfront costs for the use of a CW laser subrack and a larger footprint than an alternative solution using conventional wavelength dependent transponders.

It will be understood that the invention disclosed and defined herein extends to all alternative combinations of two or more of the individual features mentioned or evident from the text or drawings. All of these different combinations constitute various alternative aspects of the invention.

The foregoing describes embodiments of the present invention and modifications, obvious to those skilled in the art can be made thereto, without departing from the scope of the present invention.

## Claims

1. An optical modulation system for independently modulating multiple wavelengths and transmitting them along a single output waveguide, said system comprising:
a series of optical modulator elements each having at least one modulator waveguide input for inputting a single wavelength and modulation means for modulating said input single wavelength to produce a modulated wavelength output;
an array of optical laser emitters, each emitting at a separate wavelength, said array having a series of wavelength outputs, one each of which is interconnected to the waveguide modulator input of said series of optical modulator elements; and
an optical multiplexer taking a series of a modulated wavelength outputs having differing wavelengths and for multiplexing said multiple wavelengths together for output onto said single output waveguide;

2. A system as claimed in claim 1 wherein said array of optical laser emitters includes a continuous wave laser subsystem.

3. A system as claimed in claim 1 wherein said optical multiplexer further comprises:
a demultiplexer for demultiplexing a signal fed along said single output waveguide into a series of spatially displaced independent wavelength channels for output to said optical modulator elements, said optical modulator elements further comprising a receiver for decoding a received wavelength channel.

4. A system as claimed in claim 3 wherein said receiver comprises a wideband receiver able to optically receive a series of predetermined wavelengths.

5. A system as claimed in claim 1 wherein said system is located on a series of subracks and said optical modulator elements are located on a separate subrack from said optical laser emitters and are connected thereto by a series of detachable optical waveguides.

6. A system as claimed in claim 1 wherein said array of optical laser emitters includes a series of fibre lasers.

7. A system as claimed in claim 1 wherein said array of optical laser emitters includes a series of fibre lasers interconnected to at least two pump sources wherein substantially each fibre laser is separately connected to each pump source.

8. A system as claimed in claim 7 wherein said interconnection is via redundant optical couplers.

9. A system as claimed in claim 7 wherein said system further comprises a series of variable optical attenuators interconnected with said fibre lasers so as to provide variable optical attenuation of the output of said fibre lasers.

10. A system as claimed in claim 9 wherein the degree of attenuation is such that upon failure of one of said pump sources, the degree of attenuation can be adjusted to provide an output in excess of a predetermined intensity level.

11. A system as claimed in claim 1 wherein each of said optical laser emitters comprise a discrete single wavelength semiconductor laser.

12. A system as claimed in claim 1 wherein each of said optical laser emitters includes a semiconductor laser array.

13. A system as claimed in claim 1 where said modulation means includes an electro absorption modulator.

14. A system as claimed in claim 1 where said modulation means comprises a lithium niobate Mach-Zehnder modulator.

15. A system as claimed in claim 1 wherein the interconnection between said optical modulator elements and said optical laser emitters is by means of polarisation maintaining fibres.
